# EUROPÄISCHE PATENTSCHRIFT

(11) **EP 3 172 883 B1**
(45) Veröffentlichungstag und Bekanntmachung des Hinweises auf die Patenterteilung: **29.01.2020**
(21) Anmeldenummer: 15747382.8
(22) Anmeldetag: 16.07.2015
(51) Int. Cl.: H04L 29/06, H04W 12/10, H04W 12/00

(54) **TEILNEHMERIDENTITÄTSMODUL MIT MINDEST-SICHERHEITSLEVEL MSL PRÜFUNG**
SUBSCRIBER IDENTITY MODULE WITH MINIMUM SECURITY LEVEL (MSL) CHECK
MODULE D'IDENTITÉ D'ABONNÉ AVEC VÉRIFICATION D'UN NIVEAU MINIMAL DE SÉCURITÉ MSL

(30) Priorität: 23.07.2014 DE 102014011044
(43) Veröffentlichungstag der Anmeldung: 31.05.2017
(73) Patentinhaber: Giesecke+Devrient Mobile Security GmbH, 81677 München (DE)
(72) Erfinder: JARNIK, Claus, 86949 Windach (DE)
(86) Internationale Anmeldenummer: PCT/EP2015/001469
(87) Internationale Veröffentlichungsnummer: WO 2016/012086

(56) Entgegenhaltungen:
- "Smart Cards; Remote APDU structure for UICC based applications (Release 11); ETSI TS 102 226 v11.2.0", , 31. Januar 2013 (2013-01-31), Seiten 2013-1, XP055149593, Gefunden im Internet: URL:http://www.etsi.org/deliver/etsi_ts/10 2200_102299/102226/11.02.00_60/ts_102226v1 10200p.pdf [gefunden am 2014-10-29]
- "Smart cards; Secured packet structure for UICC based applications (Release 6); ETSI TS 102 225", IEEE, LIS, SOPHIA ANTIPOLIS CEDEX, FRANCE, Bd. SCP, Nr. V6.8.0, 1. Oktober 2006 (2006-10-01), XP014035416, ISSN: 0000-0001
- BORELLA M S: "METHODS AND PROTOCOLS FOR SECURE KEY NEGOTIATION USING IKE", IEEE NETWORK, IEEE SERVICE CENTER, NEW YORK, NY, US, Bd. 14, Nr. 4, 1. Juli 2000 (2000-07-01), Seiten 18-29, XP001195386, ISSN: 0890-8044, DOI: 10.1109/65.855476

## Beschreibung

Die Erfindung betrifft ein Teilnehmeridentitätsmodul, eingerichtet, beim Teilnehmeridentitätsmodul eingehende OTA-Nachrichten auf Einhaltung eines Mindest-Sicherheitslevels zu überprüfen und entsprechend einem Ergebnis der Überprüfung zu verarbeiten.

Zur Nutzung eines mobilen Endgeräts wie Smartphones oder Mobiltelefons in einem Mobilfunknetzwerk eines Netzbetreibers enthält das Endgerät ein Teilnehmeridentitätsmodul mit einer Subskription. Die Subskription ist durch einen Datensatz gebildet, der den Aufbau, Betrieb und Abbau einer Verbindung des Endgeräts im Mobilfunknetzwerk ermöglicht, und umfasst beispielsweise einen kryptographischen Authentisierungs-Schlüssel Ki und eine International Mobile Subscriber Identity IMSI. Das Teilnehmeridentitätsmodul kann entweder als entfernbare Plug-In SIM-Karte (SIM = Subscriber Identity Module) oder USIM-Karte (Universal SIM) oder UICC (Universal Integrated Circuit Card) gestaltet sein, oder alternativ als festeingelötetes eUICC (embedded UICC) oder eSIM oder eUSIM.

Die Norm ETSI TS 102 226 spezifiziert Teilnehmeridentitätsmodule (dort mit "UICC" bezeichnet) für die Nutzung von Endgeräten in Mobilfunknetzen. Teilnehmeridentitätsmodule sind dazu eingerichtet, OTA-Nachrichten zu empfangen (OTA = over the air), also Nachrichten, die über die Luftschnittstelle, also über das Mobilfunknetz, an das Teilnehmeridentitätsmodul gerichtet werden.

Im Teilnehmeridentitätsmodul sind in aller Regel mehrere Applikationen implementiert. In ETSI TS 102 226 Kap. 6.1 ist spezifiziert, dass für OTA-Nachrichten, die an eine im Teilnehmeridentitätsmodul implementierte Applikation gerichtet sind, ein Mindest-Sicherheitslevel "Minimum Security Level" MSL definiert und auf Einhaltung überprüft werden muss. Hierzu ist Level" MSL definiert und auf Einhaltung überprüft werden muss. Hierzu ist im Teilnehmeridentitätsmodul für jede Applikation ein MSL abgespeichert. Eine eingehende OTA-Nachricht muss einen MSL-Parameter enthalten. Nur OTA-Nachrichten, deren MSL-Parameter dem im Teilnehmeridentitätsmodul hinterlegten Mindestsicherheits-Level MSL der betroffenen Applikation genügen, werden an die Applikation weitergeleitet. OTA-Nachrichten ohne MSL-Parameter, oder deren MSL-Parameter dem vom Teilnehmeridentitätsmodul geforderten MSL nicht genügt, werden nicht an die Applikation weitergeleitet.

In ETSI TS 102 226 Kap. 8.2.1.3.2.4 ist weiter spezifiziert, dass der MSL und der MSL-Parameter durch Auswertung des ersten Oktetts SPI1 des Security Parameter Indicator SPI gebildet werden. Gemäß ETSI TS 102 225 Kap. 5.1.1 enthält das Datenfeld SPI1 Angaben über verwendete Sicherheitsmechanismen wie z.B. Prüfsummen, Signaturen und Verschlüsselung.

Bei der Prüfung, ob eine OTA-Nachricht mit ihrem MSL-Parameter den geforderten MSL einer Applikation in einem Teilnehmeridentitätsmodul erfüllt, wird somit überprüft, ob die OTA-Nachricht mit den richtigen Sicherheitsmechanismen erstellt wurde, beispielsweise Prüfsummenbildung, Signaturbildung und Verschlüsselung.

Das Dokument D3 (Borella, "Methods and Protocols for Secure Key Negotiation using IKE", IEEE 2000) offenbart die Bildung einer kryptographischen Prüfsumme um eine Integritätsprüfung auszuführen. Jedoch gelten die in D3 beschriebenen Protokolle wie RFC 2401 (IPSec) und RFC 2409 (IKE) nicht für OTA-Nachrichten. Insbesondere basiert IPSec auf IKE und deshalb auf einem asymmetrischen Verfahren.

Angreifern ist es gelungen, OTA-Nachrichten mit verschleiertem Absender an eine SIM-Karte zu senden, eine kryptographisch gesicherte Empfangsbestätigung der Karte zu empfangen und daraus geheime Daten aus der SIM-Karte auszuspähen. Wäre der Absender als Gefahrenquelle erkannt worden, hätte der Angriff evtl. abgewehrt werden können. Ebenso stellte das Versenden der kryptographisch gesicherten Empfangsbestätigung von der Karte an den Absender ein Risiko dar.

Der Erfindung liegt die Aufgabe zu Grunde, ein Teilnehmeridentitätsmodul zu schaffen, das Angriffen wie den oben genannten zu widerstehen. Insbesondere sollen OTA-Nachrichten aus unsicherer Quelle sicher und zuverlässig erkannt und bei Bedarf möglichst abgewehrt werden.

Die Aufgabe wird gelöst durch ein Teilnehmeridentitätsmodul nach Anspruch 1. Vorteilhafte Ausgestaltungen der Erfindung sind in den abhängigen Ansprüchen angegeben.

Das erfindungsgemäße Teilnehmeridentitätsmodul nach Anspruch 1 ist eingerichtet, eine von einem Absender beim Teilnehmeridentitätsmodul eingehende OTA-Nachricht auf Einhaltung eines Mindest-Sicherheits-Levels MSL zu überprüfen. Hierzu wird ein MSL-Parameter der OTA-Nachricht auf Konformität mit (zumindest) einem im Teilnehmeridentitätsmodul gespeicherten MSL überprüft, und die OTA-Nachricht entsprechend einem Ergebnis der Überprüfung verarbeitet. Das Verarbeiten der OTA-Nachricht - je nach Konformität - kann dabei insbesondere auch auf an sich bekannte Weise erfolgen. Das Verarbeiten kann dabei z.B. Abweisen einer nicht-konformen OTA-Nachricht umfassen, oder Weiterleiten einer konformen OTA-Nachricht innerhalb des Teilnehmeridentitätsmoduls, z.B. an eine im Teilnehmeridentitätsmodul gespeicherte Applikation.

Das Verfahren zeichnet sich dadurch aus, dass der MSL unter Verwendung von Herkunfts-Information gebildet ist, die Auskunft über zulässige mögliche Herkunft einer OTA-Nachricht gibt, und der MSL-Parameter unter Verwendung von Herkunfts-Information gebildet ist, die Auskunft über die Herkunft der OTA-Nachricht gibt.

Dadurch, dass der MSL-Parameter Auskunft über die Herkunft der Nachricht enthält, lässt sich die Herkunft der OTA-Nachricht verifizieren. Im MSL andererseits lässt sich festlegen, welche Möglichkeiten der Herkunft für OTA-Nachrichten als zulässig angesehen werden und welche als unzulässig.

Daher ist gemäß Anspruch 1 ein Teilnehmeridentitätsmodul geschaffen, bei dem OTA-Nachrichten aus unsicherer Quelle erkannt werden. Bei Bedarf können nicht-konforme Nachrichten abgewehrt werden, z.B. auf sich bekannte Weise, z.B. indem sie innerhalb des Teilnehmeridentitätsmoduls nicht weitergeleitet werden.

Der MSL und der MSL-Parameter sind wahlweise gemäß ETSI TS 102 226 gestaltet, wobei als Herkunfts-Information eine oder mehrere der folgenden vorgesehen sind: TP Service Center Address TPSCA, auch SMS Service Center Address genannt; TP Originator Address TPOA; TP Service Center Time Stamp TPSCTS. TPSCA, TPOA und TPSCTS sind Datenfelder, die gemäß ETSI TS 102 226 in einer OTA-Nachricht vorhanden sind. Gemäß der Erfindung werden diese Datenfelder, alle oder zumindest manche, in den MSL einbezogen. TPSCA, TPOA geben dabei Auskunft über Adressen des Absenders, also über die unmittelbare Herkunft der Nachricht. TPSCTS liefert die Möglichkeit, einen zusätzlichen Plausibilitätscheck bei der Herkunftsprüfung durchzuführen. TPSCTS gibt Auskunft über den Zeitpunkt der Erstellung einer OTA-Nachricht. Hierdurch können umgeleitete Nachrichten mit verschleierter Herkunft eventuell an einem zeitlich unpassenden Zeitstempel TPSCTS erkannt werden.

Das Teilnehmeridentitätsmodul enthält wahlweise eine oder mehrere Applikationen, wobei für jede Applikation ein MSL im Teilnehmeridentitätsmodul abgespeichert ist, und wobei in der OTA-Nachricht ein MSL-Parameter für eine Applikation des Teilnehmeridentitätsmoduls angegeben ist. Entsprechend ist eine eingehende OTA-Nachricht an eine Applikation gerichtet. Ist der MSL-Parameter der OTA-Nachricht konform, wird die OTA-Nachricht an die Applikation weitergeleitet, andernfalls nicht.

Der MSL und der MSL-Parameter sind wahlweise mittels einer kryptographischen Prüfsumme gebildet, bei deren Bildung ein kryptographischer Schlüssel verwendet wird, wobei das Teilnehmeridentitätsmodul und der Absender über den kryptographischen Schlüssel verfügen. Hierdurch kann ein Angreifer zwar ein Datenfeld, das in den MSL-Parameter der OTA-Nachricht eingeht, ändern, z.B. TPSCA, TPOA oder TPSCTS. Da der Angreifer den zur Bildung der Prüfsumme erforderlichen kryptographischen Schlüssel nicht hat, kann er jedoch den MSL-Parameter mit dem geänderten Datenfeld nicht bilden und somit keinen gefälschten zulässigen MSL-Parameter erzeugen.

Das Teilnehmeridentitätsmodul ist wahlweise eingerichtet, bei einem Ergebnis der Überprüfung, dass die OTA-Nachricht mit dem MSL nicht konform ist, eine Fehlerfall-Verarbeitung durchzuführen, die eine der folgenden Maßnahmen umfasst.
a) Ausgabe einer mittels eines kryptographischen Schlüssels kryptographisch gesicherten Empfangsbestätigung (PoR, "Proof of Receipt") umfassend einen für das Ergebnis der Überprüfung spezifischen Fehlercode an den Absender. Bei dieser Variante der Fehlerfall-Verarbeitung erfährt der Absender, dass und warum die OTA-Nachricht abgewiesen wurde. Da die Empfangsbestätigung kryptographisch gesichert ist, besteht die Gefahr, dass ein Angreifer daraus den geheimen Schlüssel ausspäht.
b) Ausgabe einer nicht kryptographisch gesicherten Empfangsbestätigung umfassend einen für das Ergebnis der Überprüfung spezifischen Fehlercode an den Absender. Bei dieser Variante der Fehlerfall-Verarbeitung besteht, im Unterschied zu Variante a), keine Gefahr, dass ein Angreifer aus der Empfangsbestätigung den geheimen Schlüssel ausspäht.
c) Ausgabe einer nicht kryptographisch gesicherten Empfangsbestätigung umfassend einen unspezifischen, das Ergebnis der Überprüfung nicht widerspiegelnden Fehlercode an den Absender. Bei dieser Variante der Fehlerfall-Verarbeitung werden, im Vergleich zu der Variante b) zusätzlich die Ursachen, warum die OTA-Nachricht abgewiesen wurde, vor dem Absender geheimgehalten. Ein Angreifer bekommt somit weniger Hinweise, wie er seine Manipulationsversuche verbessern kann.
d) Unterlassen der Ausgabe einer Empfangsbestätigung an den Absender. Diese Variante ist besonders vorteilhaft, da ein Angreifer-Absender keinerlei Hinweis erhält, ob seine OTA-Nachricht akzeptiert wurde oder nicht. Noch weniger bekommt der Angreifer Hinweise auf Gründe einer Zurückweisung der OTA-Nachricht oder gar auf geheime Schlüssel.

Im Folgenden wird die Erfindung an Hand von Ausführungsbeispielen und unter Bezugnahme auf die Zeichnung näher erläutert, in der zeigt:
- Fig. 1: Datenfelder zur Bildung eines MSL, gemäß dem Stand der Technik und gemäß einer Ausführungsform der Erfindung;
- Fig. 2: ein Beispiel eines UPDATE RECORD Kommandos, das in eine OTA-Nachrichten gemäß ETSI TS 102 225 integriert ist.

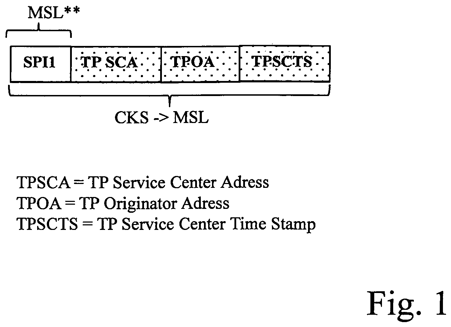

Fig. 1 zeigt Datenfelder zur Bildung eines MSL, gemäß dem Stand der Technik und gemäß einer Ausführungsform der Erfindung. Gemäß ETSI TS 102 225, Kap. 5.1.1 wird der herkömmliche MSL** geprüft, indem die Datenfelder des ersten Oktetts SPI1 des Security Parameter Indicator SPI geprüft werden. Wie die Prüfung erfolgt, ist in ETSI TS 102 225 offen gehalten. Gemäß der Erfindung gehen in den MSL, zusätzlich zu den herkömmlichen Datenfeldern des SPI1, herkunftsspezifische Datenfelder ein, in Fig. 1 TPSCA, TPOA und TPSCTS. Gemäß der gezeigten Ausführungsform wird der MSL mittels einer Geheimschlüssel-basierten kryptographischen Prüfsumme CKS über die Datenfelder SPI1, TPSCA, TPOA und TPSCTS gebildet.

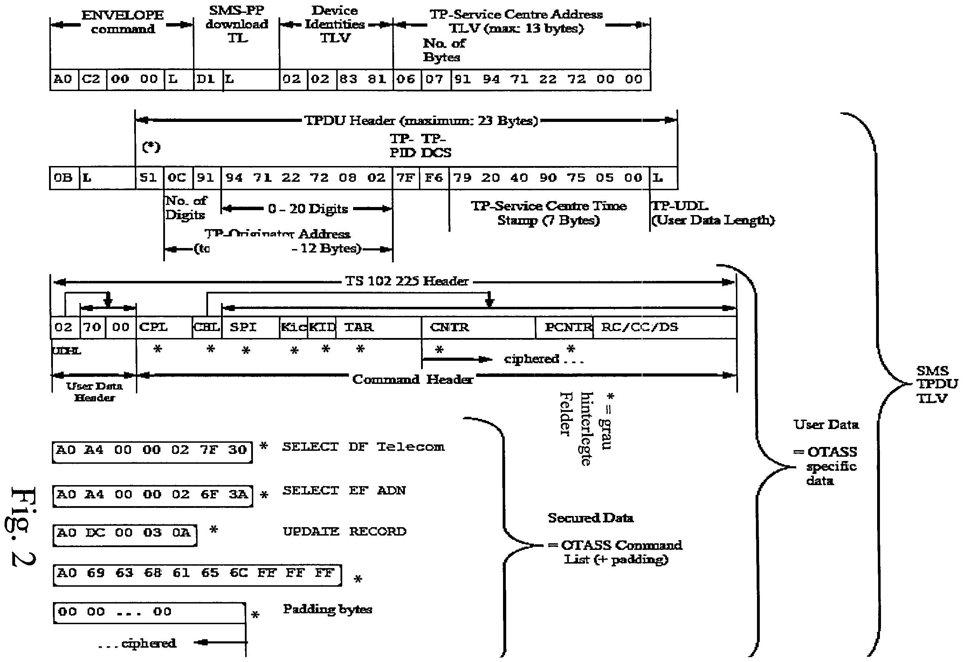

Fig. 2 zeigt ein Beispiel eines UPDATE RECORD Kommandos, das in eine OTA-Nachrichten gemäß ETSI TS 102 225 integriert ist. Das UPDATE RECORD Kommando ist als ENVELOPE Kommando gestaltet und enthält Datenfelder TP Service Centre Adress (max 13 Byte) (TPSCA), TP Originator Adress (2-12 Byte) (TPOA) und TP Service Centre Time Stamp (7 Byte) (TPSCTS). Gemäß ETSI TS 102 225 wird SPI1 zur Festlegung des MSL verwendet. Gemäß ETSI TS 102 225, Kap. 5.1, Tabelle 1 und 2, können weiter die in Fig. 2 grau hinterlegten Datenfelder mittels Redundancy Check RC, kryptographischer Prüfsumme CC oder digitaler Signatur DS geschützt werden (vgl. Tabelle 2, NOTE 3). Erfindungsgemäß werden zusätzlich herkunftsspezifische Datenfelder wie TPSCA, TPOA und TPSCTS zur Berechnung des MSL des Teilnehmeridentitätsmoduls bzw. MSL-Parameters der OTA-Nachricht verwendet.

## Patentansprüche

1. Teilnehmeridentitätsmodul, eingerichtet, eine von einem Absender beim Teilnehmeridentitätsmodul eingehende OTA-Nachricht auf Einhaltung eines Mindest-Sicherheits-Levels MSL zu überprüfen, indem die OTA-Nachricht auf Konformität mit einem im Teilnehmeridentitätsmodul gespeicherten MSL überprüft wird, und die OTA-Nachricht entsprechend einem Ergebnis der Überprüfung zu verarbeiten,
**dadurch gekennzeichnet, dass**
der gespeicherte MSL unter Verwendung von Herkunfts-Information gebildet ist, die Auskunft über zulässige mögliche Herkunft einer OTA-Nachricht gibt, und ein MSL-Parameter der OTA-Nachricht unter Verwendung von Herkunfts-Information gebildet ist, die Auskunft über die Herkunft der OTA-Nachricht gibt,
wobei bei der Überprüfung auf Konformität die Herkunft der OTA-Nachricht anhand des MSL-Parameters der OTA-Nachricht verifiziert wird, und
wobei der gespeicherte MSL und der MSL-Parameter der OTA-Nachricht mittels einer kryptographischen Prüfsumme gebildet sind, bei deren Bildung ein kryptographischer Schlüssel verwendet wird, und
wobei das Teilnehmeridentitätsmodul und der Absender über den kryptographischen Schlüssel verfügen.

2. Teilnehmeridentitätsmodul nach Anspruch 1, wobei der gespeicherte MSL und der MSL-Parameter der OTA-Nachricht gemäß ETSI TS 102 226 gestaltet sind, und wobei als Herkunfts-Information eine oder mehrere der folgenden vorgesehen sind: TP Service Center Address TPSCA; TP Originator Address TPOA; TP Service Center Time Stamp TPSCTS.

3. Teilnehmeridentitätsmodul nach Anspruch 1 oder 2, das eine oder mehrere Applikationen enthält, wobei für jede Applikation ein gespeicherte MSL im Teilnehmeridentitätsmodul abgespeichert ist, und wobei in der OTA-Nachricht ein MSL-Parameter der OTA-Nachricht für eine Applikation des Teilnehmeridentitätsmoduls angegeben ist.

4. Teilnehmeridentitätsmodul nach einem der Ansprüche 1 bis 3, eingerichtet, bei einem Ergebnis der Überprüfung, dass die OTA-Nachricht mit dem MSL nicht konform ist, eine Fehlerfall-Verarbeitung durchzuführen, die eine der folgenden Maßnahmen umfasst:
a) Ausgabe einer kryptographisch gesicherten Empfangsbestätigung umfassend einen für das Ergebnis der Überprüfung spezifischen Fehlercode an den Absender;
b) Ausgabe einer nicht kryptographisch gesicherten Empfangsbestätigung umfassend einen für das Ergebnis der Überprüfung spezifischen Fehlercode an den Absender;
c) Ausgabe einer nicht kryptographisch gesicherten Empfangsbestätigung umfassend einen unspezifischen, das Ergebnis der Überprüfung nicht widerspiegelnden Fehlercode an den Absender;
d) Unterlassen der Ausgabe einer Empfangsbestätigung an den Absender.

## Claims

1. A subscriber identity module devised to check an OTA message from a sender incoming at the subscriber identity module for compliance with a Minimum Security Level MSL by checking the OTA message as to conformity with an MSL stored in the subscriber identity module, and processing the OTA message according to a result of the check,
**characterized in that**
the stored MSL is formed while employing an origin information item which provides information about a permissible, possible origin of OTA message, and an MSL parameter of the OTA message is formed while employing an origin information item which provides information about the origin of the OTA message, wherein upon the check as to conformity the origin of the OTA message is verified with the help of the MSL parameter of the OTA message, and
wherein the stored MSL and the MSL parameter of the OTA message are formed by means of a cryptographic checksum upon whose forming a cryptographic key is employed, and
wherein the subscriber identity module and the sender have the cryptographic key.

2. The subscriber identity module according to claim 1, wherein the stored MSL and the MSL parameter of the OTA message are designed according to ETSI TS 102 226 and wherein as origin information item one or several of the following are provided: TP Service Center Address TPSCA; TP Originator Address TPOA; TP Service Center Time Stamp TPSCTS.

3. The subscriber identity module according to claim 1 or 2, which contains one or several applications, wherein for each application a stored MSL is stored in the subscriber identity module, and wherein in the OTA message an MSL parameter of the OTA message for an application of the subscriber identity module is stated.

4. The subscriber identity module according to any of claims 1 to 3, devised, upon a result of the check that the OTA message having the MSL is not conformal, to carry out an error case processing which comprises one of the following measures:
a) outputting a cryptographically secured confirmation of receipt to the sender comprising a specific error code for the result of the check;
b) outputting a not cryptographically secured confirmation of receipt to the sender comprising a specific error code for the result of the check;
c) outputting a not cryptographically secured confirmation of receipt to the sender comprising an unspecific error code not reflecting the result of the check;
d) omitting the issuing of a confirmation of receipt to the sender.

## Revendications

1. Module d'identité d'abonné, conçu pour vérifier un message OTA d'un expéditeur, entrant au module d'identité d'abonné, quant au respect d'un niveau minimum de sécurité MSL, ce qui a lieu en ce que le message OTA est vérifié quant à sa conformité avec un MSL mémorisé dans le module d'identité d'abonné, et pour traiter le message OTA en fonction d'un résultat de la vérification,
**caractérisé en ce que**
le MSL mémorisé est constitué en utilisant une information de provenance qui renseigne sur une provenance admissible possible d'un message OTA, et qu'un paramètre MSL du message OTA est constitué en utilisant une information de provenance qui renseigne sur la provenance du message OTA,
cependant que, lors de la vérification quant à la conformité, la provenance du message OTA est vérifiée à l'aide du paramètre MSL du message OTA, et
cependant que le MSL mémorisé et le paramètre MSL du message OTA sont constitués au moyen d'une somme cryptographique de contrôle, lors de la constitution desquels une clé cryptographique est utilisée, et
cependant que le module d'identité d'abonné et l'expéditeur disposent de la clé cryptographique.

2. Module d'identité d'abonné selon la revendication 1, cependant que le MSL mémorisé et le paramètre MSL du message OTA sont paramétrés conformément à ETSI TS 102 226, et cependant que, comme information de provenance, une ou plusieurs des suivantes sont prévues : TP Service Center Address TPSCA ; TP Originator Address TPOA ; TP Service Center Time Stamp TPSCTS.

3. Module d'identité d'abonné selon la revendication 1 ou 2, lequel contient une ou plusieurs applications, cependant que, pour chaque application, un MSL mémorisé est mémorisé dans le module d'identité d'abonné, et cependant que, dans le message OTA, un paramètre MSL du message OTA est indiqué pour une application du module d'identité d'abonné.

4. Module d'identité d'abonné selon une des revendications de 1 à 3, conçu pour, en cas de résultat de la vérification selon lequel le message OTA n'est pas conforme au MSL, effectuer un traitement de cas de défaut qui comprend une des mesures suivantes :
a) délivrance d'une confirmation de réception sécurisée cryptographiquement, comprenant un code de défaut, spécifique pour le résultat de la vérification, à l'expéditeur ;
b) délivrance d'une confirmation de réception non sécurisée cryptographiquement, comprenant un code de défaut, spécifique pour le résultat de la vérification, à l'expéditeur ;
c) délivrance d'une confirmation de réception non sécurisée cryptographiquement, comprenant un code de défaut non spécifique, ne reflétant pas le résultat de la vérification, à l'expéditeur ;
d) abstention de la délivrance d'une confirmation de réception à l'expéditeur.
